## Europäisches Patentamt
## European Patent Office
## Office européen des brevets

(11) Veröffentlichungsnummer: **0 099 023**
**B1**

(12) **EUROPÄISCHE PATENTSCHRIFT**

(45) Veröffentlichungstag der Patentschrift:
05.11.86

(21) Anmeldenummer: **83106308.6**

(22) Anmeldetag: **29.06.83**

(51) Int. Cl.⁴: **G 01 N 21/47**

(54) Remissionsmesskopf.

(30) Priorität: **14.07.82 DE 3226370**

(43) Veröffentlichungstag der Anmeldung:
**25.01.84 Patentblatt 84/4**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**DE-A-2 657 156**
**DE-A-3 009 690**
**US-A-3 999 864**

(73) Patentinhaber: **Bayer Diagnostic + Electronic GmbH, Steinerstrasse 15, D-8000 München 70 (DE)**

(72) Erfinder: **Barry, Jürgen, Perlacher Strasse 30, D-8000 München 90 (DE)**
Erfinder: **Jansky, Karl Peter, Hauserweg 4a, D-8193 Münsing (DE)**

(74) Vertreter: **Geyer, Ulrich F., Dr. Dipl.- Phys., Steinerstrasse 15, D-8000 München 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft einen Remissionsmeßkopf zum Messen von Remissionen, die von einem remittierenden Material remittiert werden, mit einem Sender und einem Empfänger in Form von Lichtleitern.

Remissionsmeßköpfe dieser Art sind üblich und sind dafür vorgesehen, die Remission von lichtremittierenden Flächen zu ermitteln und quantitativ zu erfassen. Bei dem bekannten Remissionsmeßverfahren werden die Meßergebnisse durch Glanzreflexe verfälscht, die von Glanzstellen auf der remittierenden Probe herrühren. Um derartige Verfälschungen der Meßergebnisse zu vermeiden, weisen die herkömmlichen Anordnungen Glanzfallen bzw. Blenden auf, die einen erheblichen zusätzlichen Aufwand darstellen und zu komplizierten Anordnungen-mit hohem Justieraufwand führen.

Der Erfindung liegt daher die Aufgabe zugrunde, einen Remissionsmeßkopf zu schaffen, mit dem Verfälschungen der Meßergebnisse, die durch Glanzreflexe entstehen können, vermieden werden.

Diese Aufgabe wird - ausgehend vom eingangs dargelegten Remissionsmeßkopf erfindungsgemäß mit den im kennzeichnenden Teil des Anspruchs 1 angegebenen Merkmalen gelöst.

Unter Beachtung der im Anspruch 1 angegebenen Gleichungen lassen sich Remissionsmeßköpfe schaffen, bei denen sicher vermieden wird, daß Strahlung durch Glanzreflexe, die am remittierenden Material auftreten können, auf den Empfänger auftreffen. Dadurch wird sicher vermieden, daß Glanzstellen, die auf der zu messenden, remittierenden Fläche vorhanden sind, und an denen Glanzreflexe auftreten, das Remissionsme-ergenis verfälschen oder beeinträchtigen. Die Eliminierung von Verfälschungen der Meßergebnisse durch Glanzreflexe gemäß der vorliegenden Erfindung erfolgt ohne zusätzliche Glanzfallen oder Blenden, so daß dadurch der Remissionsmeßkopf einfach aufgebaut und kein Justieraufwand mehr erforderlich ist.

Vorzugsweise ist der Aperturwinkel f des Empfangslichtleiters $\varepsilon \approx \alpha + \delta$. Dadurch ist sichergestellt, daß der Empfangslichtleiter Licht von allen Stellen der vom Senderlichtleiter bestrahlten Remissionsfläche aufnehmen kann, wodurch der gesamte vom Lichtkegel des Senderlichtleiters bestrahlte Flächenbereich des remittierten Materials bei der Remissionsmessung berücksichtigt wird.

Beste Ergebnisse bei der Remissionsmessung kommen dann zustande, wenn der Winkel $\alpha$ zwischen 40° und 50° und vorzugsweise 45° gewählt ist. Bei einem Winkel von $\alpha = 45°$ und einer Beleuchtung der remittierenden Fläche senkrecht zur Probenfläche ergibt sich die optimale Remissionsmessung, wobei diese Anordnung als sogenannte 0° - 45° -Anordnung bezeichnet wird.

Vorzugsweise befinden sich die Empfängerfläche und die Senderfläche in einer Ebene, die zur Remissionsfläche parallel liegt. In diesem Falle, wenn also $b_1 = b_2$ gewählt ist, ist es vorteilhaft, zwischen der Sender- und Empfängerebene einerseits und der remittierenden Fläche andererseits eine lichtdurchlässige Platte, beispielsweise eine Glasplatte mit der Brechzahl n anzuordnen. Dadurch ergibt sich ein definierter Abstand zwischen der Sender- und Empfängerebene einerseits und dem remittierenden Material andererseits, so daß keine Meßpegelschwankungen durch Abstandsänderungen auftreten. Das remittierende Material liegt auf der der durch Sender- und Empfängerebene aufgespannten Ebene gegenüberliegenden Seite der lichtdurchlässigen Platte bei der Messung auf.

Bei Verwendung einer lichtdurchlässigen Platte mit der Brechzahl n = 1,5 soll der Winkel $\alpha$ im Medium etwa 28° betragen. Dadurch wird das unter 45° remittierte Licht vom Empfänger empfangen, weil zwischen dem remittierenden Material und der Glasplatte ein kleiner Luftzwischenraum (Brechzahl n = 1) vorhanden ist.

Vorzugsweise ist der Aperturwinkel u des Senderlichtleiters in einem Medium mit einer Brechzahl n $\approx$ 1,5, beispielsweise in einer Glasplatte, kleiner als 14°. Dadurch werden mit handelsüblichen Lichtleitern Glanzreflexe vermieden. Der Aperturwinkel $\varepsilon$ des Empfängerlichtleiters ist vorzugsweise größer als 34° bei einer Brechzahl der lichtdurchlässigen Platte von n $\approx$ 1,5. In Zusammenhang mit einem Winkel $\alpha$ von etwa 28° und einem Winkel $\delta$ von kleiner als 14° genügt die Summe dieser Winkel der Beziehung $\alpha \approx + \delta$

Gemäß einer vorteilhaften Ausführungsform der Erfindung sind wenigstens zwei Empfänger in jeweils gleichem Abstand x vom Sender in einer Ebene angeordnet. Auch hier genügt der Abstand x den Beziehungen des Anspruchs 1. Durch die Verwendung mehrerer Empfänger in Form von Lichtleitern mit dem genannten Abstand x ist es möglich, auf einfache Weise Verfälschungen der Meßergebnisse durch Struktureinflüsse zusätzlich zur Vermeidung von Verfälschungen der Meßergebnisse durch Glanzreflexe weitgehend zu vermeiden. Struktureinflüsse treten insbesondere bei Textilien auf. Auf rund der Verwendung von mehreren Sendern erfolgt eine Mittelung der remittierenden Strahlung, wodurch Verfälschungen der eigentlichen Remissionsmessung, beispielsweise bei der Messung der zu untersuchenden Verfärbung, die durch Inhomogenitäten auf der verfärbten Fläche herrühren und zu unterschiedlichen Bewertungen führen, vermieden werden.

Gemäß einer weiteren sehr vorteilhaften Ausgestaltung der Erfindung wird die Beeinflussung der Meßergebnisse durch Inhomogenitäten auf der zu messenden Fläche und durch Struktureinflüsse weiterhin noch

wirkungsvoller dadurch vermieden, daß mehrere Sender und mehrere Empfänger abwechselnd jeweils in gleichem Abständen x zueinander matrixförmig in einer Ebene angeordnet sind. Durch die symmetrische und wechselseitige Anordnung von Sendern und Empfängern ergeben sich Meßwerte, die nahezu vollständig von Einflüssen durch Strukturen oder Inhomogenitäten der zu messenden Fläche befreit sind. Wenn der Aperturwinkel $\varepsilon$ der Empfangslichtleiter der Beziehung $\varepsilon \approx \alpha + \delta$ genügt, werden von den jeweiligen Empfängerlichtleitern mehrere Bereiche, die von unterschiedlichen Senderlichtkegeln beleuchtet werden, beim Lichtempfang erfaßt, wodurch sich eine Mittelung ergibt und Verfälschungen der Meßwerte durch Inhomogenitäten und Struktureffekte noch sicherer vermieden werden.

Die Erfindung wird nachstehend anhand der Zeichnungen beispielsweise näher erläutert. Es zeigen:

Fig. 1 eine schematische Darstellung der Remissionsmeßkopfanordnung zur Erläuterung der vorliegenden Erfindung,

Fig. 2 eine Anordnung mit einem Sender und vier ihn umgebenden Empfängern und

Fig. 3 einen Sender, der von sechs Empfängern umgeben ist,

Fig. 4 eine matrixförmige Anordnung mehrerer Sender und mehrerer Empfänger.

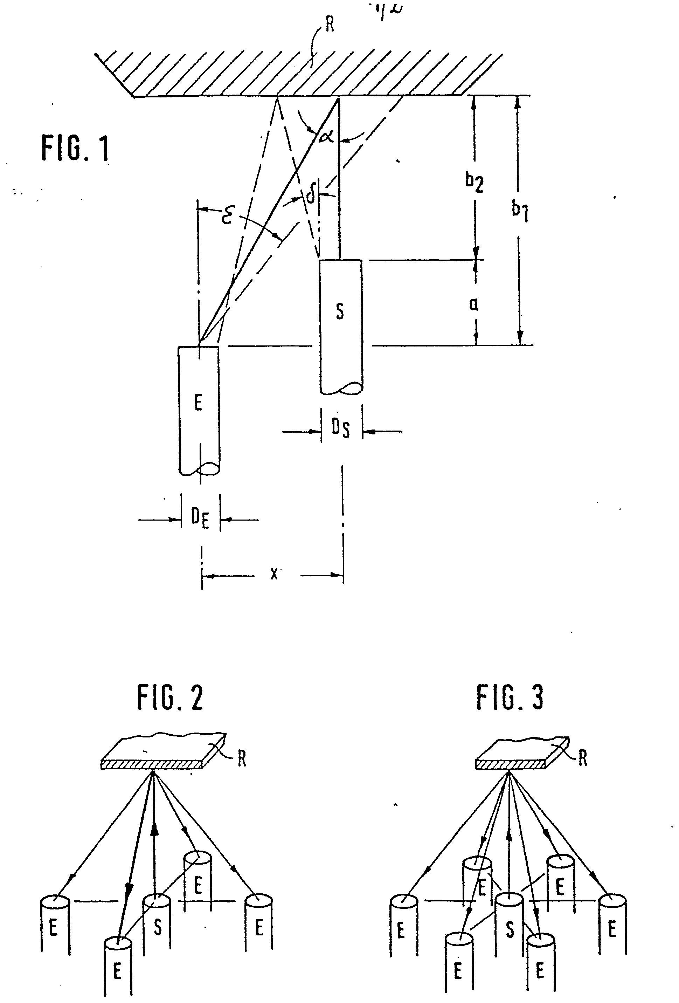

Bei der in Figur 1 schematisch dargestellten Anordnung eines Senders und eines Empfängers für einen Remissionsmeßkopf sind die Winkel, Abstände und Durchmesser eingetragen, auf die es bei der vorliegenden Erfindung ankommt, und die in den erfindungsgemäßen Merkmalen definiert bzw. festgelegt wird.

Figur 2 zeigt eine Rasteranordnung, bei der sich vier Empfänger in symmetrischer Anordnung um einen Sender herum befinden. Das vom remittierenden Material R remittierte Licht fällt auf vier unterschiedliche Empfänger auf, wodurch sich vier unterschiedliche Remissionsrichtungen ergeben, in denen die Remission gemessen wird. Durch die sich dadurch ergehende Mittelung werden Struktureinflüsse des remittierenden Materials, die sich durch Verfälschungen der eigentlichen Remissionsmeßwerte bemerkhar machen, unterdrückt.

In Fig. 3 ist eine Ausführungsform dargestellt, bei der der Sender von sechs Empfängern umgeben ist, so daß in sechs unterschiedlichen Richtungen die Remission gemessen wird. Dadurch ergibt sich eine noch bessere Mittelung, wodurch Struktureffekte bei der Remissionsmessung noch weiter eliminiert werden. In den Figuren 2 und 3 können die Empfänger durch Sender und der Sender durch einen Empfänger ersetzt werden. Die Erfindung läßt sich auch für diese Fälle mit gleicher Wirkung entsprechend anwenden.

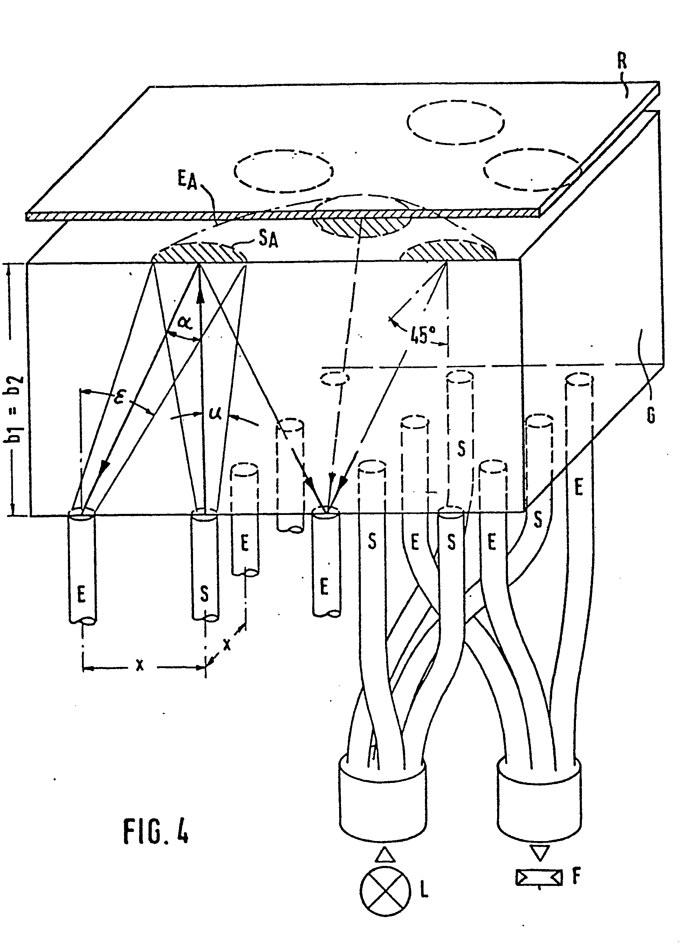

Bei dem in Figur 4 dargestellten Remissionsmeßkopf wird das von einer Lichtquelle L abgegebene Licht über ein Bündel von Sendern S in Form von Lichtleitfasern an die Austrittsflächen der Lichtleitfasern geführt, wobei die Austrittsflächen dieser Lichtleitfasern eine Ebene definieren. In gleicher Weise wird Licht, das auf die Eintrittsflächen der Empfänger auftrifft, die in Form von Lichtleitfasern ausgebildet sind, auf einen Photoempfänger F geführt, der ein entsprechendes Signal an eine Meßanordnung weiterleitet. Die Eintrittsebenen der Empfänger liegen hier in der durch die Austrittsebenen der Sender definierten Ebene.

Zwischen dem remittierenden Material R und der durch die Sender und Empfänger definierten Ebene befindet sich eine lichtdurchlässige Platte G, die eine Dicke $b_1 = b_2$ aufweist. Auf der linken Seite von Figur 4 sind Lichtwege entsprechend Figur 1 nochmals dargestellt. Vom Sender S gelangt ein Strahl parallel zur Normalen der remittierenden Fläche des remittierenden Materials R auf die remittierende Fläche. Dieser Strahl ist dick ausgezogen dargestellt. Nach der Remission an der remittierenden Fläche gelangt ein Strahl unter einem Winkel $\alpha$ auf einen Empfänger E.

Ebenfalls auf der linken Seite von Figur 4 sind die Senderaperturfelder SA bzw. der Senderaperturwinkeld $\mu$ und die Empfangsaperturfelder EA bzw. die Empfangswinkelapertur $\varepsilon$ dargestellt.

Aus der Figur ist unmittelbar ersichtlich, daß die Eintrittsflächen der Empfangslichtleiter remittierte Strahlung empfangen, die jeweils von mehreren hzw. unterschiedlichen Sendern emittiert werden. Denn im Empfangsaperturfeld EA liegen mehrere Senderaperturfelder SA verschiedener Sender. Auf diese Weise wird die remittierte Strahlung beim Empfang gemittelt und damit weitere Einflüsse aufgrund von Strukturen oder Inhomogenitäten der remittierenden Fläche unterdrückt.

Zwischen der Glasplatte G mit einer Brechzahl $n \approx 1,5$ und der remittierenden Fläche R befindet sich ein Luftspalt. Dadurch sieht die Eintrittsfläche des Empfangslichtleiters die unter 45° remittierte Strahlung.

Die Erfindung wurde anhand von bevorzugten Ausführungsbeispielen beschrieben. Dem Fachmann sind zahlreiche Abwandlungen und Ausgestaltungen möglich, ohne daß dadurch der Erfindungsgedanke verlassen wird. Beispielsweise ist es möglich, in Figur 1 den Sender durch einen Empfänger zu ersetzen, und umgekehrt (sogenannte 45°-0° -Anordnung im Gegensatz zu der beschriebenen Ausführungsform mit der 0°-45° -Anordnung), bei der die entsprechenden Beziehungen gelten und dieselben Vorteile der Erfindung erzielt werden.

## Patentansprüche

1. Remissionsmeßkopf zum Messen von Remissionen, die von einem remittierenden Material (R) remittiert werden, mit einem Sender und einem Empfänger in Form von Lichtleitern, <u>dadurch gekennzeichnet</u>, daß die Lichtleiter (E, S) zueinander parallel sind, daß die Sender- und Empfängerflächen parallel zur Meßfeldebene sind, daß der Abstand $b_1$ zwischen der Empfängerfläche (E) und der Meßfeldebene der Beziehung

$$b_1 = \frac{\frac{1}{2}D_s + \frac{1}{2}D_e - a \tan \delta}{\tan \alpha - 2 \tan \delta}$$

und daß der Abstand x zwischen den Achsen des Empfangs- und des Senderlichtleiters (E bzw. S) der Beziehung

$x = b_1 \cdot \tan \alpha$

genügt, wobei $\alpha$ der Winkel zwischen dem auf der Mitte der Empfängerfläche auftreffenden, remittierten Lichtstrahl und der Normalen auf der Meßfeldebene $\delta$ ein Winkel, der größer oder gleich dem Aperturwinkel u des gewählten Senderlichtleiters (S),

a die Differenz zwischen den Abständen der Senderfläche von der Meßfeldebene einerseits und der Empfängerfläche von der Meßfeldebene andererseits,

$D_s$ gleich dem Durchmesser des Senderlichtleiters (S) und $D_E$ der Durchmesser des Empfangslichtleiters (E) ist.

2. Remissionsmeßkopf nach Anspruch 1, dadurch gekennzeichnet, daß der Aperturwinkel $\varepsilon$ des Empfangslichtleiters (E) der Beziehung $\varepsilon \approx \alpha + \delta$ entspricht.

3. Remissionsmeßkopf nach Anspruch 1 oder 2, dadurch gekennzeichnet, daß der Winkel $\alpha$ zwischen 48° und 50° und vorzugsweise 45° groß ist.

4. Remissionsmeßkopf nach einem der Ansprüche 1 bis 3, dadurch gekennzeichnet, daß dann, wenn $b_1 = b_2$ gewählt ist, zwischen der Sender- und Empfängerfläche einerseits und dem remittierenden Materlal (R) andererseits eine lichtdurchlässige Platte (G) mit einer Brechungszahl n $\approx$ 1,5 angeordnet ist.

5. Remissionsmeßkopf nach Anspruch 4, dadurch gekennzeichnet, daß in einem Medium mit der Brechungszahl n $\approx$ 1,5 $\alpha$ = 28° ist.

6. Remissionsmeßkopf nach einem der Ansprüche 1 bis 5, dadurch gekennzeichnet, daß wenigstens zwei Empfänger (E) in jeweils gleichem Abstand x vom Sender (S) angeordnet sind und daß die Empfängerflächen in einer Ebene liegen.

7. Remissionsmeßkopf nach einem der Ansprüche 1 bis 6, dadurch gekennzeichnet, daß mehrere Sender (S) und mehrere Empfänger (E) abwechselnd jeweils in gleichen Abständen x zueinander matrixförmig angeordnet sind und daß die Sender- und Emplängerflächen in einer Ebene ligen.

## Claims

1. A reflection measuring head for measuring reflections reflected by a reflecting material (R), having a transmitter and a detector in the form of light guides (E, S), characterised in that the light guides (E, S) are parallel to one another, that the transmitter and detector areas are parallel to the measuring field plane, that the distance $b_1$ between the detector area (E) and the measuring field plane satisfies the relation

$$b_1 = \frac{\frac{1}{2}D_s + \frac{1}{2}D_e - a \tan \delta}{\tan \alpha - 2 \tan \delta}$$

and that the distance $\infty$ between the axes of the detector and transmitter light guides (E and S) satisfies the relation

$x = b_1 \cdot \tan \alpha$

whereby

$\alpha$ is the angle between the reflected light beam striking the middle of the detector area and the normal to the measuring field plane,

$\delta$ is an angle which is greater than or equal to the aperture angle u of the selected transmitter light guide (S), a is the difference between on the one hand the distance between the transmitter area and the measuring field plane and, on the other, the distance between the detector area and the measuring field plane,

$D_S$ equals the diameter of the transmitter light guide (S), and $D_E$ is the diameter of the detector light guide (E).

2. A reflection measuring head as claimed in Claim 1, characterised in that the aperture angle $\varepsilon$ of the detector light guide (E) satisfies the relation $\varepsilon \approx \alpha + \delta$

3. A reflection measuring head as claimed in Claim 1 or Claim 2, characterised in that the angle $\alpha$ is between 40° and 50°, and is preferably 45°.

4. A reflection measuring head as claimed in any one of Claims 1 to 5, characterised in that, when $b_1 = b_2$ is selected, a light-transmitting plate (G) having a refractive index of n $\approx$ 1.5 is disposed between the transmitter and detector areas on the one hand and the reflecting material (R) on the other hand.

5. A reflection measuring head as claimed in Claim 4, characterised in that $\alpha$ = 26° in a medium having the refractive index n $\approx$ 1.5.

6. A reflection measuring head as claimed in any one of Claims 1 to 5, characterised in that at least two detectors (E) are disposed each at the same distance $\alpha$ from the transmitter (S), and that the detector areas lie in one plane.

7. A reflection measuring head as claimed in any one of Claims 1 to 6, characterised in that a plurality of transmitters (S) and a plurality of detectors (E) are disposed alternately at equal distances $\alpha$ from one another in a matrix pattern, and that the transmitter and detector areas lie in one plane.

## Revendications

1. Tête de mesure pour la mesure de réflexions qui sont réfléchies par une matière (R) réfléchissante, comportant un émetteur et un récepteur sous la forme de conducteurs de lumière (E, S), caractérisée en ce que les conducteurs de lumière (E, S) sont parallèles entre eux, que les surfaces d'émission et de réception sont parallèles au plan du champ de mesure, en ce que la distance $b_1$ séparant la surface de réception E et le plan du champ de mesure satisfait à la relation

$$b_1 = \frac{\frac{1}{2} D_s + \frac{1}{2} D_e - a \tan \delta}{\tan \alpha - 2 \tan \delta}$$

et en ce que la distance x séparant les axes du guide optique de réception et d'émission (E ou S) satisfait à la relation
x = $b_1$. tan α
où
α est l'angle compris entre le rayon lumineux réfléchi, tombant au milieu de la surface de réception et la normale au plan du champ de mesure,
δ est un angle supérieur ou égal à l'angle d'ouverture u du guide optique d'émission (S) choisi, a est la différence entre les distances séparant la surface d'émission du plan du champ de mesure d'une part et la surface de réception du plan du champ de mesure d'autre part, $D_S$ est le diamètre du guide optique d'émission (S) et $D_E$ est le diamètre du guide optique de réception E.

2. Tête de mesure pour la mesure de réflexion selon la revendication 1, caractérisée en ce que l'angle d'ouverture ε du conducteur de lumière sur réception (E) satisfait à la relation ε ≈ + ε

3. Tête de mesure pour la mesure de réflexion selon la revendication 1 ou 2, caractérisée en ce que l'angle α est compris entre 40 et 50° et est de préférence égal à 45°.

4. Tête de mesure pour la mesure de réflexion selon l'une des revendications 1 à 3, caractérisée en ce que, si l'on choisit $b_1 = b_2$, une plaque (G) se laissant traverser par la lumière, ayant un indice de réfraction n ≈ 1,5, est disposée entre la surface d'émission et de réception d'une part et la matière (R) réfléchissante d'autre part.

5. Tête de mesure pour la mesure de réflexion selon la revendication 4, caractérisée en ce que dans un milieu d'indice de réfraction n ≈ 1,5, α est égal à 28°.

6. Tête de mesure pour la mesure de réflexion selon l'une des revendications 1 à 5, caractérisée en ce qu'au moins deux récepteurs (E) sont disposés chacun à une même distance (x) de l'émetteur (S) et en ce que les surfaces de réception se situent dans un même plan.

7. Tête de mesure pour la mesure de réflexion selon l'une des revendications 1 à 6, caractérisée en ce que plusieurs émetteurs (S) et plusieurs récepteurs (E) sont disposés alternativement chacun à une même distance (x) les uns des autres en forme de matrice et en ce que les surfaces d'émission et de réception se situent dans un même plan.

FIG. 1

FIG. 2

FIG. 3

FIG. 4